# FASCICULE DE BREVET EUROPEEN

(11) **EP 0 707 133 B1**
(45) Date de publication et mention de la délivrance du brevet: **13.01.1999**
(21) Numéro de dépôt: 95420135.6
(22) Date de dépôt: 24.05.1995
(51) Int. Cl.: E21B 17/08, E21B 17/042, F16L 15/00

(54) **Assemblage fileté pour tubes**
Gewindeverbindung für Rohre
Threaded joint for pipes

(30) Priorité: 13.10.1994 FR 9412441
(43) Date de publication de la demande: 17.04.1996
(73) Titulaire: VALLOUREC MANNESMANN OIL & GAS FRANCE, 59620 Aulnoye-Aymeries (FR); SUMITOMO METAL INDUSTRIES, LTD., Osaka-Shi, Osaka 541 (JP)
(72) Inventeur: Noel, Thierry, F-59990 Sebourg (FR); Tsujimura, Takuya, Amagasaki (JP)
(74) Mandataire: Desolneux, Jean-Paul Charles

(56) Documents cités:
- EP-A- 0 027 771
- EP-A- 0 488 912
- FR-A- 1 488 719
- GB-A- 2 146 085
- US-A- 2 992 019
- US-A- 3 574 373
- US-A- 3 870 351

## Description

L'assemblage fileté pour tubes suivant l'invention concerne les tubes utilisés dans l'industrie pour la réalisation de tubes de production ou de tubes de cuvelage pour l'exploration ou l'exploitation de gisements de pétrole ou de gaz, ainsi que les tubes utilisés pour toute application dans laquelle le même type de problèmes peut se poser comme par exemple la géothermie ou la vapeur.

De nombreuses difficultés sont rencontrées dues à la nécessité d'assurer l'étanchéité des liaisons entre les extrémités des tube, les tubes étant généralement métalliques.

Les assemblages de tubes les plus utilisés comportent des filetages tronconiques qui permettent d'obtenir en un très petit nombre de tours un serrage stable qui présente une excellente tenue mécanique sans risques de dévissage.

Par contre, ces filetages sont incapables d'assurer l'étanchéité de l'assemblage car le pétrole ou le gaz sous haute pression circulent facilement de long des filets grâce aux jeux existants. L'utilisation de graisses chargées en fines particules solides de différents types retarde ces fuites mais ne les supprime pas.

On sait par contre obtenir une étanchéité grâce à des zones annulaires de butée et de portée, usinées sur chaque élément d'assemblage qui permettent, par un serrage accompagné d'une déformation élastique suffisante, de réaliser un contact étanche métal-métal. On connaît différents types de réalisations d'assemblages d'éléments filetés mâle et femelle permettant l'obtention de liaisons étanches métal-métal particulièrement performantes. C'est le cas de l'assemblage décrit dans la demande de brevet EP 0488912 A3. L'élément mâle tronconique fileté comporte une zone de butée formée par une surface tronconique concave qui vient en appui contre une surface femelle tronconique convexe ; une zone de portée tronconique convexe adjacente à la butée mâle vient simultanément en appui contre une surface femelle tronconique concave.

Suivant la demande EP 488 912, il est prévu une surface de guidage permettant d'éviter les risques fréquents d'endommagement de la surface de portée mâle, par accrochage de celle-ci avec le filetage femelle, au moment de l'introduction de l'élément mâle à l'intérieur de l'élément femelle.

Les assemblages ainsi réalisés, bien qu'ils présentent une bonne étanchéité ont l'inconvénient de nécessiter la réalisation de surépaisseurs importantes. Des solutions alternatives ont été proposées qui n'ont pas donné pleine satisfaction.

La demande de brevet EP 0027771 A1 décrit un assemblage de tubes par manchon dans lequel les bords frontaux des deux éléments mâles viennent en butée l'un contre l'autre à l'intérieur du manchon. De plus, on donne à ces bords frontaux un profil tronconique concave qui favorise un gonflement des extrémités des éléments mâles qui viennent ainsi en appui contre la paroi intérieure du manchon, cylindrique dans la zone médiane de celui-ci. Ce brevet décrit différents profils particuliers permettant d'améliorer encore, d'une part l'étanchéité du contact réalisé au niveau des bords frontaux et d'autre part, l'étanchéité du contact entre la paroi cylindrique du manchon et les surfaces latérales en regard des éléments mâles adjacents aux bords frontaux.

Ce type d'assemblage permet effectivement de réduire l'épaisseur du manchon et de simplifier son usinage intérieur. Mais il comporte au moins deux inconvénients importants : premièrement les surfaces de butée, de préférence tronconiques, se déforment plastiquement au cours du serrage sur leurs bords latéraux et de multiples vissages-dévissages aggravent ces déformations jusqu'à détruire l'étanchéité de la butée et celle aussi des portées latérales sur le manchon ; deuxièmement, dans le cas d'une longue colonne de tubes, la contrainte axiale de traction due au poids de la colonne peut devenir telle que le contact de butée est réduit ou supprimé et, simultanément, il en est de même pour les portées latérales sur le manchon, pour lesquelles la pression radiale exercée par la zone d'extrémité de l'élément mâle est supprimée lorsque l'effet de butée disparaît.

La demande de brevet GB 2 146 085 A décrit un assemblage fileté pour tubes tels que ceux utilisés pour la vapeur, le gaz ou le pétrole sous pression.

Cette demande reprend les caractéristiques essentielles de la demande EP 27771. Comme dans cette demande, les bords frontaux des deux éléments mâles viennent en butée par leur bord extérieur, à cause de leur forme tronconique concave, à l'intérieur du manchon. Avec un serrage suffisant l'ouverture en V que présentent ces bords en direction de l'intérieur se referme en même temps qu'il y a expansion et mise en appui contre la paroi intérieure du manchon dans la zone médiane de celui-ci.

La zone de butée constitue, comme dans le cas de la demande de EP 27771, une première zone d'étanchéité et le contact radial qui résulte du serrage de la butée avec la paroi intérieure du manchon constitue une deuxième zone d'étanchéité. Des épaulements permettent de limiter le déplacement axial de chacun des éléments mâles à l'intérieur du manchon.

L'assemblage suivant cette demande GB présente pratiquement les mêmes avantages et les mêmes inconvénients que la demande EP citée plus haut.

Il est pratiquement impossible d'éviter des phénomènes de grippage et de déformation plastique des bords frontaux au cours de leur vissage l'un contre l'autre, même si on remplace les bords tronconiques concaves par des bords arrondis. Il paraît de plus très difficile d'obtenir un déplacement radial suffisant et reproductible pour combler le vide annulaire existant entre la paroi du manchon et les parois en regard des éléments mâles adjacentes aux bords frontaux.

Ici aussi, si la traction exercée par la colonne de tubes devient trop importante, les zones d'étanchéité primaire et secondaire perdent complètement leur étanchéité.

On a recherché la possibilité de conserver les avantages présentés par les manchons d'épaisseur réduite tels que ceux décrits dans les deux derniers documents cités. Ces avantages sont en effet une conséquence de la suppression des talons en surépaisseur, dans lesquels sont usinées les butées et portées décrites dans les documents tels que la demande de brevet EP 488912 citée plus haut.

On a recherché principalement la possibilité de réaliser des assemblages économiques comportant une double étanchéité, par butée d'une part, et par portée de l'autre, assemblages dans lesquels un desserrage de la butée, provoqué par exemple par un poids particulièrement élevé de la colonne de tubes, n'aurait pas d'incidence directe sur le niveau d'étanchéité de la portée.

On a cherché aussi à éviter les risques de dégradation rapide de la qualité du contact métal-métal, réalisé entre les bords frontaux des éléments mâles de l'assemblage, à la suite de cycles répétés de dévissage et revissage de ces éléments mâles.

On a aussi cherché à établir une deuxième zone d'étanchéité, de longueur axiale limitée, pour faciliter l'usinage, zone ne nécessitant pas un accroissement sensible d'épaisseur du manchon, le niveau d'étanchéité obtenu dans cette deuxième zone ne variant pas de façon notable lors d'un desserrage éventuel du contact de butée entre les bords frontaux des éléments mâles.

On a cherché à résoudre de façon sûre et reproductible le problème de la réalisation d'un calage axial précis et reproductible des deux éléments mâles en butée l'un contre l'autre à l'intérieur d'un manchon, en évitant le risque d'un serrage par vissage insuffisant ou excessif, de l'un des deux éléments mâles par rapport à l'autre.

L'assemblage fileté pour tubes suivant la présente invention comporte un manchon dont les deux extrémités sont munies de logements filetés femelles, aptes à recevoir les éléments d'extrémité mâles filetés de deux tubes qu'il s'agit d'assembler. Les extrémités de chacun de ces éléments mâles comportent une paroi frontale dont, éventuellement, le bord intérieur comporte un arrondi ou un angle abattu. La longueur axiale de la zone d'extrémité dépourvue de filetage de chaque élément mâle est déterminée pour, qu'en vissant à fond ces éléments dans leur logements femelles respectifs, leurs parois frontales viennent en butée l'une contre l'autre. Le contact serré entre ces deux surfaces de butée constitue avantageusement un contact d'étanchéité métal-métal. L'établissement de ce contact est précédé par un autre contact d'étanchéité métal-métal réalisé entre une zone annulaire de la paroi périphérique de la zone d'extrémité de chaque élément mâle, de préférence adjacente à la paroi frontale, et une zone annulaire correspondante de la paroi intérieure du manchon. Ces deux zones annulaires ont des surfaces tronconiques dont les génératrices sont inclinées par rapport à l'axe du manchon. Les génératrices de ces surfaces tronconiques forment avantageusement avec l'axe, un angle de 5° à 25° et sont avantageusement parallèles entre elles dans leur zone médiane, mais ces surfaces peuvent comporter à leurs extrémités des courbes de raccordement avec les parois adjacentes. Ces surfaces tronconiques sont orientées de façon que leurs diamètres décroissent en se rapprochant du milieu du manchon. Elles sont disposées et dimensionnées de façon que la surface tronconique de chaque élément mâle vienne en contact en cours de vissage avec la surface femelle correspondante du manchon et que l'interférence entre ces deux surfaces crée une portée tronconique d'étanchéité métal-métal.

La longueur de génératrice de ces portées tronconiques d'étanchéité est avantageusement comprise entre environ 0,5 à 5 mm. Les caractéristiques d'étanchéité de ces portées tronconiques dépendent du niveau de contrainte atteint, de l'état de surface et des caractéristiques des revêtements et/ou lubrifiants utilisés. Ces revêtements et/ou lubrifiants jouent un rôle particulièrement important quand les assemblages réalisés sont destinés à subir de nombreux cycles de vissage-dévissage au cours de leur utilisation.

L'utilisation de surfaces de portées tronconiques comportant des génératrices très courtes est facilitée par un positionnement axial précis de chaque élément mâle à l'intérieur du manchon, afin que le plan de butée des extrémités des deux tubes se trouve rigoureusement et de façon reproductible positionné lors du vissage de l'assemblage là où la géométrie du joint donne le maximum d'efficacité c'est à dire dans une zone de tolérance bien définie par rapport au plan médian du manchon.

Pour atteindre ce but, on utilise sur le manchon et sur les tubes un système d'épaulements d'arrêt qu'on place sur le manchon de préférence au voisinage des surfaces d'étanchéité femelles. Les épaulements situés sur le manchon sont préférentiellement au nombre de deux, positionnés à égale distance du plan médian du manchon. Toutefois, l'assemblage fileté peut ne comporter qu'un épaulement situé d'un seul côté du manchon correspondant à l'engagement et au positionnement par vissage d'un seul élément mâle. Chacun de ces épaulements est muni d'une surface annulaire d'arrêt, orientée de façon telle qu'elle s'oppose à l'avance de l'élément mâle correspondant. Chaque composant mâle de son côté comporte un épaulement muni d'une surface annulaire d'arrêt correspondant à la surface annulaire d'arrêt du manchon de façon que sa progression soit bloquée par l'épaulement correspondant du manchon. Lorsqu'il y a deux épaulements d'arrêt sur le manchon, l'écartement axial des surfaces annulaires d'arrêt des éléments mâles, lorsque ces éléments sont en position de butée, est déterminé, en tenant compte des tolérances d'usinage, de façon à être légèrement supérieur à l'écartement des surfaces annulaires des épaulements solidaires du manchon afin qu'il subsiste, en fonctionnement normal, un certain jeu quand les parois frontales des éléments mâles sont en butée l'une contre l'autre.

Ainsi ces épaulements ne peuvent pas empêcher la mise en butée des deux éléments mâles.

Un mode de réalisation de l'assemblage suivant l'invention consiste à visser le premier élément mâle jusqu'à interférence entre les deux surfaces tronconiques d'étanchéité, puis blocage de l'avance par la première paire d'épaulements concernée. A ce moment, la paroi frontale de ce premier élément dépasse légèrement le plan médian du manchon. On visse alors le deuxième élément mâle jusqu'à interférence entre les deux surfaces tronconiques d'étanchéité, puis venue en butée des deux parois frontales d'extrémité des deux tubes. Si on continue, il se produit un léger recul élastique du premier élément mâle, sans inconvénient du point de vue étanchéité des surfaces tronconiques, puis éventuellement, un blocage par la deuxième paire d'épaulements. Ce mode opératoire garantit un vissage dans des conditions optimales avec un certain degré d'étanchéité au niveau des parois frontales en butée des deux tubes et surtout, une excellente étanchéité au niveau des surfaces tronconiques d'étanchéité. Il suffit pour obtenir les meilleurs résultats, sans risquer un serrage excessif des butées, de régler avec beaucoup de soin le jeu nécessaire des épaulements dont le but n'est pas de créer une étanchéité supplémentaire, mais de permettre un centrage précis de l'assemblage. En général, la géométrie de l'assemblage est calculée de façon, compte tenu des tolérances de fabrication, à ne pas avoir de blocage du deuxième élément mâle sur la deuxième paire d'épaulements en assemblant le joint dans des conditions normales. Dans ces conditions, seules sont utilisées les surfaces annulaires d'arrêt qui se trouvent d'un côté du manchon. On peut donc, sur le plan de la fonctionnalité, utiliser des manchons ayant un épaulement d'arrêt d'un seul côté. Bien que, dans ce cas, seule l'extrémité de l'élément mâle devant être vissée dans le logement femelle du manchon équipé d'un épaulement d'arrêt doive être munie d'un épaulement d'arrêt correspondant, on s'arrangera avantageusement pour avoir une géométrie du manchon du côté non muni d'épaulement d'arrêt, qui permette de visser indifféremment des extrémités d'éléments mâles munis ou non d'épaulement d'arrêt. On peut alors prévoir un épaulement d'arrêt sur toutes les extrémités de tubes mâles bien que le manchon ne soit équipé que d'un seul côté d'un épaulement d'arrêt. De façon préférentielle, lorsque le manchon ne comporte un épaulement que d'un seul côté, l'assemblage fileté sera réalisé en vissant et positionnant sur le manchon du côté où il est muni d'un épaulement, une extrémité de tube mâle correspondant, en usine ou atelier, l'autre extrémité de tube mâle venant se visser et se positionner pour achever l'assemblage sur le chantier où sont utilisés les tubes. Toutefois, pour des raisons d'ordre pratique, la solution préférentielle consiste à travailler avec un manchon comportant deux épaulements d'arrêt symétriques, le manchon pouvant être utilisé indifféremment d'un côté ou de l'autre, les écartements axiaux entre épaulements étant calculés comme expliqué plus haut.

La paroi frontale située à l'extrémité de chacun des éléments mâles peut être plane ou non. Dans le cas où elle est plane, cette paroi est perpendiculaire à l'axe du tube. Elle peut aussi, par exemple, présenter une légère conicité de quelques degrés ou fraction de degrés par rapport au plan perpendiculaire à l'axe ou encore avoir une forme différente. Avantageusement, la surface commune d'appui des deux parois frontales des éléments mâles en position vissée est plane et perpendiculaire à l'axe du manchon. Une telle surface commune d'appui plane et perpendiculaire à l'axe peut être obtenue à partir de parois frontales planes et perpendiculaires à l'axe sur chaque extrémité d'élément mâle, ou bien encore par déformation élastique de parois frontales coniques présentant un angle d'inclinaison faible par rapport à un plan perpendiculaire à l'axe qui, sous l'effet de la pression de contact combinée avec la déformation de l'extrémité de l'élément mâle, donnent naissance à une surface commune d'appui en position vissée plane et perpendiculaire à l'axe du manchon.

Les filetages peuvent être tronconiques et dans ce cas présenter à l'état assemblé une interférence positive, négative ou nulle ou ils peuvent être cylindriques. Avantageusement dans le cas de filetages tronconiques, on réalisera les filetages à interférence positive, ceux-ci assurant à l'état vissé une liaison radiale entre filetage mâle et filetage femelle. En ce qui concerne les épaulements d'arrêt, comme on le verra dans les exemples, plusieurs emplacements sont possibles. Bien que les positions les plus rapprochées aient la préférence, on peut envisager d'éloigner les épaulements en les plaçant par exemple à mi-longueur de filetages mâles et femelles, par exemple cylindriques, de diamètres différents, séparés par une surface annulaire formant épaulement d'arrêts.

Un mode particulièrement avantageux de réalisation de l'assemblage fileté suivant l'invention permet de maintenir l'étanchéité du contact métal-métal réalisé entre les surfaces tronconiques convexes des éléments mâles et les surfaces tronconiques concaves correspondantes du manchon d'assemblage, malgré des conditions d'utilisation sévères et l'exécution de nombreux cycles de dévissage puis revissage en service.

Selon ce mode particulier, chaque surface tronconique convexe est reliée, à partir de son extrémité de grand diamètre, à une surface de préférence cylindrique qui assure la liaison avec un épaulement d'arrêt mâle, par l'intermédiaire d'une surface annulaire de raccordement torique.

Dans ce cas, la génératrice de la surface tronconique convexe a avantageusement une longueur comprise entre environ 1 et 5 mm, de préférence 2 ± 1 mm, et une inclinaison par rapport à l'axe comprise entre 5 et 25°. La génératrice de la surface torique de raccordement a un rayon compris entre 1 et 25,4 mm, de préférence 4 à 8 mm. L'ouverture d'arc de cette génératrice, dans le cas d'un raccordement avec une surface cylindrique, est égale à l'inclinaison de la surface tronconique convexe. A son extrémité de faible diamètre, cette surface tronconique convexe est reliée à la paroi frontale de l'élément mâle, de préférence, par une surface torique dont la génératrice a un rayon généralement de plus faibles dimensions que ci-dessus.

La surface tronconique concave du manchon devant coopérer avec la surface tronconique convexe de l'élément mâle, a la même pente de génératrice mais une longueur un peu plus importante. Son extrémité amont, de diamètre supérieur à l'extrémité correspondante de la surface tronconique convexe est reliée par une surface, de préférence cylindrique, à l'épaulement d'arrêt femelle.

On constate qu'en sélectionnant convenablement les dimensions et l'inclinaison des surfaces tronconiques convexe et concave ainsi que le rayon principal de raccordement de la surface tronconique convexe à la surface cylindrique située en amont et aussi le rayon secondaire de raccordement de cette surface tronconique convexe à la paroi frontale, on obtient une meilleure répartition des contraintes entre les surfaces venant en pression l'une contre l'autre lors du serrage par vissage de chaque élément mâle dans son logement.

On constate, en particulier, qu'après vissage des surfaces tronconiques convexe et concave, la contrainte de serrage maximale vient s'exercer entre la zone d'extrémité de grand diamètre de la surface tronconique convexe et la surface tronconique concave contre laquelle vient en appui cette surface convexe relativement étroite. Le déplacement au vissage de l'extrémité de l'élément mâle, suivant l'axe commun de celui-ci et du manchon, fait glisser cette zone de pression élevée le long de la surface tronconique concave et répartit l'usure sur une partie d'une surface du manchon qui est revêtue d'une couche protectrice.

Cette répartition de l'usure de la couche protectrice sur une zone relativement large permet de prolonger de façon très importante sa durée de vie et donc de retarder les risques d'arrachement de métal. Au contraire, une usure localisée de la surface tronconique convexe qui n'est pas protégée ne présente pas les mêmes inconvénients. Comme cela a été décrit plus haut, la géométrie de la zone d'extrémité de l'élément mâle et du manchon sont ajustées de façon que lorsque la paroi frontale de l'élément mâle atteint le plan médian du manchon, situé entre les deux logements femelles, le serrage réalisé entre les deux surfaces tronconiques assure une excellente étanchéité métal-métal. Cette étanchéité est maintenue en réalisant un serrage frontal des deux éléments mâles l'un contre l'autre au voisinage de ce plan médian. Comme indiqué plus haut, la position des paires d'épaulements d'arrêt mâle-femelle, de chaque côté du manchon est déterminée de façon que les surfaces d'arrêt correspondantes ne puissent pas se trouver simultanément en contact de chaque côté du manchon. Dans la pratique, on ajuste le jeu total entre ces paires de surfaces d'arrêt de façon qu'il soit de l'ordre de 0,1 à 0,5 mm. Le manchon peut ne comporter qu'un seul épaulement d'arrêt. Dans ce cas, l'extrémité amont, côté filetage de la surface tronconique concave, est reliée par une surface de forme adaptée au filetage femelle. De préférence, un espace annulaire qui permet lors de l'usinage du filetage femelle l'introduction ou l'enlèvement de l'outil d'usinage est prévu dans l'espace réalisé entre les épaulements d'arrêt et le début du filetage femelle.

Les figures schématiques et les exemples ci-après décrivent, de façon non limitative, les caractéristiques de l'assemblage fileté pour tubes métalliques suivant l'invention, ainsi que des modes particuliers de réalisation et d'utilisation de cet assemblage.

Figure 1 : Vue schématique d'ensemble en coupe d'un assemblage suivant l'invention. Seule la coupe au-dessus de l'axe est représentée.

Figure 2 : Vue schématique de la zone médiane de l'assemblage de la figure 1 avant serrage.

Figure 3 : Vue schématique de la zone médiane de la figure 2 après serrage.

Figure 4 : Vue schématique d'un assemblage suivant l'invention comportant des épaulements rapprochés.

Figure 5 : Vue schématique d'un assemblage suivant l'invention comportant des épaulements placés entre des tronçons de filetage de diamètres différents.

Figure 6 : Vue schématique d'un assemblage suivant l'invention, comportant des surfaces d'étanchéité tronconiques, dans lequel la surface tronconique convexe est prolongée vers l'amont par une surface torique.

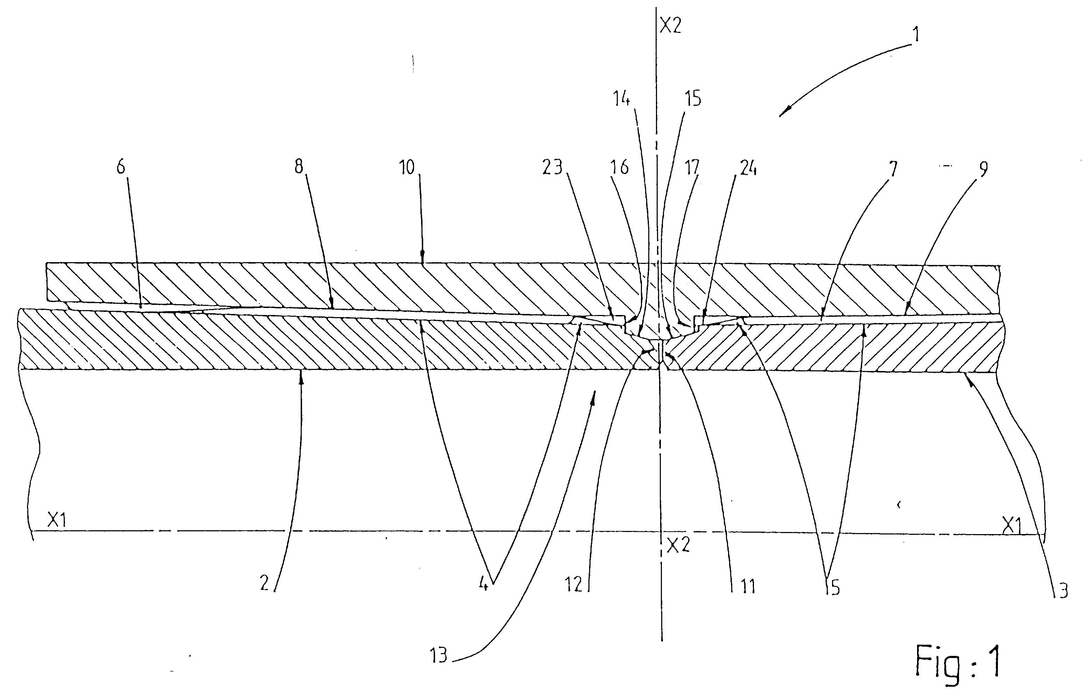

On voit figure 1 de façon schématique et en coupe un assemblage fileté 1 suivant l'invention. L'axe X1-X1 situé dans le plan de la figure est celui de l'assemblage, seule la moitié supérieure étant représentée.

Cet assemblage comporte les éléments mâles 2, 3 qui constituent les extrémités de deux tubes métalliques non représentés. Ces éléments mâles 2, 3 comportent des filetages tronconiques 4, 5 engagés dans les filetages correspondants 6, 7 des logements femelles 8, 9 d'un manchon 10. Ces filetages ont, de préférence, une pente d'environ 2,5 à 10 % par rapport à X1-X1 et sont, de préférence, d'un type dit à interférence positive, assurant en position de vissage serré une liaison radiale sans jeu entre éléments mâles et logements femelles.

Les parois annulaires frontales 11, 12 de chaque élément mâle 2, 3 ont une surface annulaire plane, perpendiculaire à l'axe de chaque élément mâle, axe qui se confond avec X1-X1 après vissage.

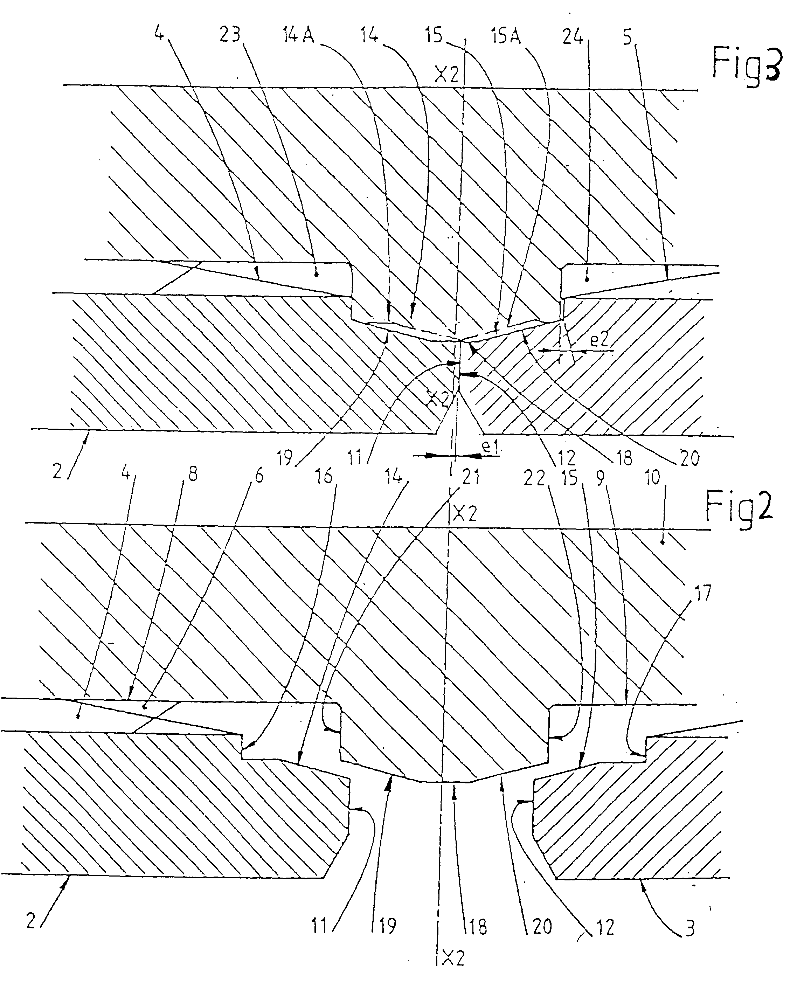

Les figures 2 et 3 représentent de façon schématique et agrandie la zone médiane 13 de l'assemblage 1 vue en coupe. Dans le cas de la figure 2 les éléments mâles 2, 3 n'ont pas encore atteint le fond des logements 8, 9. Chacun de ces éléments mâles comporte une surface périphérique 14, 15 de forme générale tronconique qui se raccorde à la paroi frontale 11, 12. Cette surface 14, 15 est tronconique convexe, son axe est celui de l'élément mâle correspondant qui se confond avec X1- X1 et a un demi-angle au sommet qui est compris entre environ 5 et 25°. La longueur de la génératrice de cette surface est fonction de cet angle et aussi du diamètre de l'assemblage. On voit que chacune de ces surfaces tronconiques 14, 15 se raccorde avec la paroi frontale 11, 12 correspondante par sa petite base. La grande base de chacune de ces surfaces tronconiques se raccorde à un épaulement d'arrêt 16, 17 constitué par une surface annulaire plane perpendiculaire à X1-X1, surface qui se raccorde par sa périphérie à l'extrémité de petit diamètre du filetage mâle 4, 5. De préférence, la distance est faible entre cet épaulement d'arrêt 16, 17 et la surface tronconique convexe 14, 15. Comme le montre cette même figure 2, le manchon 10 comporte un plan de symétrie perpendiculaire à X1-X1 qui coupe la figure 2 suivant X2-X2. On voit que la paroi intérieure du manchon comporte, dans le cas du présent exemple, une étroite zone annulaire 18 cylindrique coupée en 2 par l'axe X2-X2. Une telle zone cylindrique 18 peut ne pas exister dans d'autres formes de réalisation. De part et d'autre de la zone cylindrique 18 se raccordent les surfaces 19, 20 de forme générale tronconique concave d'axe X1-X1 opposées par leur petite base et disposées symétriquement par rapport au plan de trace X2-X2. Les génératrices des surfaces 19, 20 ont une inclinaison par rapport à X1-X1 comprise entre environ 5 et 25° inclinaison qui est égale ou sensiblement égale à celle des surfaces tronconiques convexes 14, 15. Les diamètres des petites et grandes bases des surfaces tronconiques 14, 15, d'une part et 19, 20 d'autre part sont déterminés pour que, après serrage des éléments mâles 2, 3 par vissage à fond dans leurs logements femelles 8, 9, les parois frontales 11, 12 se trouvant en butée au voisinage du plan de trace X2-X2, la majeure partie de chacune de ces surfaces tronconiques soit venue en appui contre la surface opposée. A la figure 3 on a représenté de façon schématique le phénomène d'interférence qui se produit lors du vissage des éléments mâles 2, 3 jusqu'à mise en butée sous pression des parois frontales 11, 12 dans un plan voisin du plan de trace X2-X2. Le tracé en tirets des droites 14A et 15A représente la position qu'atteindraient les génératrices 14 et 15 des surfaces tronconiques convexes si elles n'entraient pas en contact avec les surfaces tronconiques concaves 19 et 20.

Comme cela est connu, on évite les phénomènes de grippage, au niveau des surfaces d'étanchéité et aussi, si nécessaire, au niveau des filetages en faisant appel à des traitements chimiques, tels que la phosphatation au Zn ou Mn, ou bien au dépôt de couches métalliques telles que Cu, Ni ou autres traitements de surface. On peut utiliser aussi seuls ou en association avec ces dépôts différents types de lubrifiants tels que certaines graisses ou de nombreux types d'huile.

Dans le cas des figures 1 à 3 on remarque l'existence des espaces annulaire libres 23, 24 prévus à l'intérieur du manchon entre les épaulements d'arrêt 21, 22 et l'extrémité du filetage femelle correspondant 6, 7. Ces espaces sont prévus pour servir, si nécessaire, à recevoir la graisse en excès et éviter une montée en pression et contribuer ainsi à la lubrification de l'assemblage dans de bonnes conditions au cours des cycles successifs de vissage-dévissage. Ces espaces servent également à l'éclipsage des outils d'usinage en cours de fabrication.

La disposition particulière des couples d'épaulements d'arrêt 16-21 et 17-22 permet la réalisation d'un mode d'assemblage particulièrement efficace. Il consiste à visser initialement un premier élément mâle 2 dans son logement femelle correspondant 8 jusqu'à détection d'un accroissement brutal en quelque sorte discontinu du couple de serrage avec blocage de l'avance dû à la mise en contact des deux épaulements d'arrêt correspondants 16-21. En général, la paroi frontale 11 passe alors légèrement au-delà du plan de trace X2-X2 lors de la progression du premier élément mâle 2 dans le manchon. On effectue ensuite le vissage du deuxième élément mâle dans son logement, serrage au cours duquel on pourra observer une première augmentation du couple due à l'interférence des filetages 5-7 et des portées coniques 15-20 puis due à la venue en butée des parois frontales 11, 12. Le deuxième élément mâle repousse un peu la paroi frontale 11 du premier élément mâle, les deux extrémités 11-12 se trouvant en position vissée dans un plan qui fait, en général, un petit écart "e₁" avec le plan de trace X2-X2. Il peut, compte tenu des tolérances et des couples de vissage, exister des cas où les deux extrémités 11-12 se trouvent en position vissée dans un plan sensiblement confondu avec le plan de trace X2-X2. En position vissée de l'assemblage, on observe un léger jeu "e₂" entre les surfaces d'épaulement mâle 17 et femelle 22 pour le deuxième élément mâle, léger jeu visible sur la figure 3, les surfaces d'épaulement mâle 16 et femelle 21 du premier élément mâle étant en contact.

En employant ce mode d'assemblage on est pratiquement sûr de réaliser les deux liaisons métal-métal, la première au niveau des parois frontales 11-12 et la deuxième à celui des portées tronconiques 14-19, 15-20, avec un niveau d'étanchéité présentant un maximum de garanties. On constate, après ce deuxième vissage un léger desserrage du premier couple d'épaulements, les surfaces du premier couple d'épaulement 16-21 restant en général en contact comme expliqué ci-dessus.

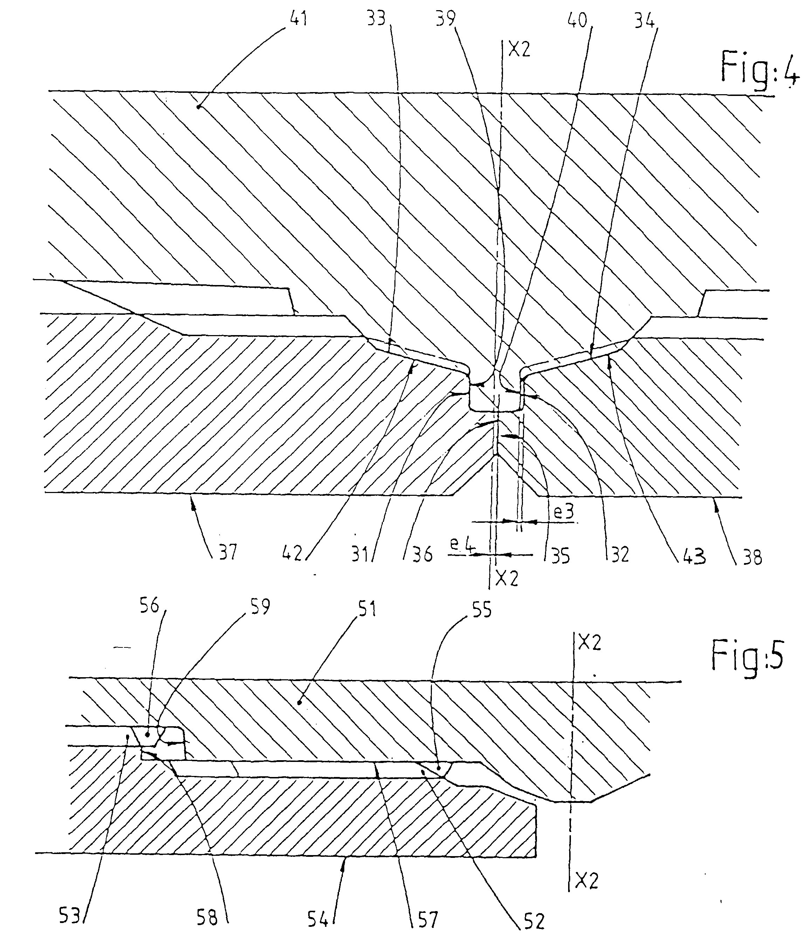

La figure 4 représente une variante d'exécution de l'assemblage décrit aux figures 1 à 3. Comme le montre cette figure schématique 4 cette variante consiste à rapprocher au maximum les épaulements d'arrêt. On voit que les deux épaulements d'arrêt mâles 31, 32 sont compris entre les petites bases des surfaces d'étanchéité tronconiques convexes 33, 34 et les parois frontales 35, 36 des éléments mâles 37, 38. On remarque que la distance entre les épaulements d'arrêt 39, 40 du manchon 41 est égale ou à peine supérieure à la longueur de la zone cylindrique 18 des figures 2 et 3. Il en résulte que les surfaces d'étanchéité tronconiques concaves 42, 43 ont une position pratiquement inchangée et que les conditions d'utilisation de l'assemblage ne sont donc pas modifiées. Là encore, à l'état vissé, il existe un léger jeu "e₃" entre les épaulements 32-40, jeu visible sur la figure 4, le plan de butée en position vissée des parois frontales faisant un faible écart "e₄" par rapport au plan X2-X2 de symétrie.

La figure 5 représente une autre variante d'exécution suivant laquelle on utilise, au lieu de filetages tronconiques des filetages cylindriques à deux étages. Comme le montre cette figure 5 qui représente de façon schématique un manchon 51 qui est partiellement coupé, les épaulements d'arrêt sont situés au niveau de chaque élément mâle tel que 54 et logement femelle tel que 57 dans la zone assurant la liaison entre les deux étages des filetages mâles et femelles. Les filetages mâle et femelle sont chacun en deux étages 52, 53 pour l'élément mâle 54 et 55, 56 pour le logement femelle 57.

La variation de diamètre des deux tronçons de filetage pour chaque élément mâle tel que 54 fait apparaître une surface annulaire constituant un épaulement d'arrêt mâle tel que 58 et un épaulement d'arrêt femelle tel que 59. Les autres caractéristiques de l'assemblage sont inchangées.

Les filetages utilisés pour réaliser l'invention peuvent être de tous types, tels que conique ou cylindrique et de toutes formes telles que par exemple buttress à flancs chargés à angles positifs ou négatifs ou autre. Ils peuvent comporter un ou deux étages, les épaulements pouvant dans ce cas être disposés à d'autres emplacements que ceux représentés figure 5.

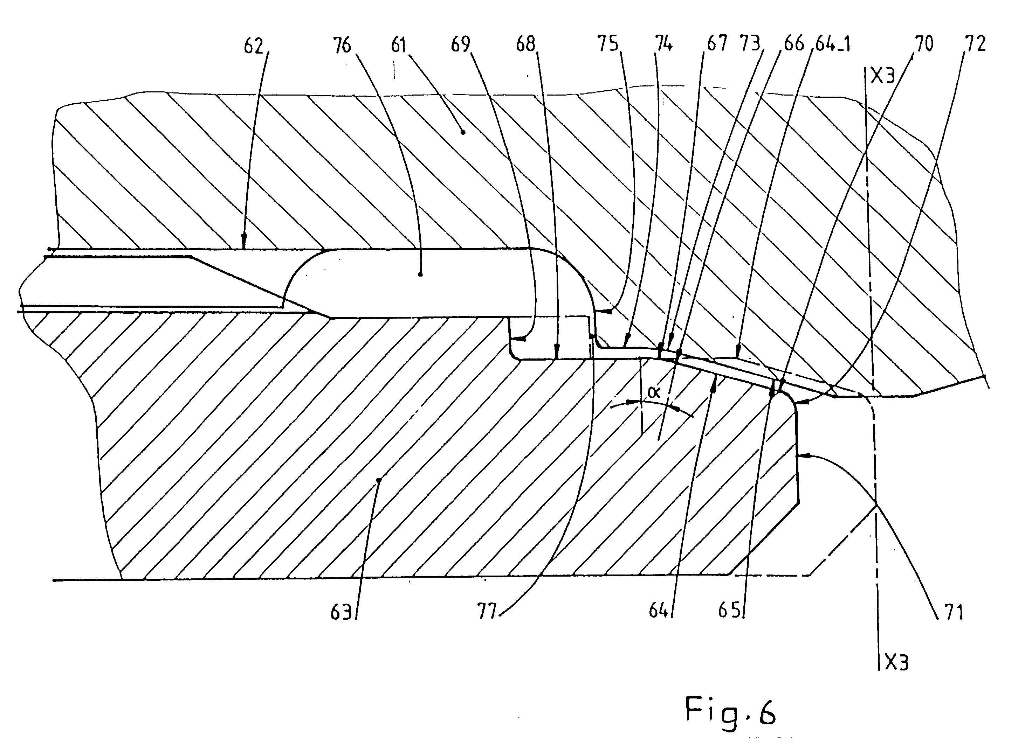

La figure 6 représente de façon schématique un assemblage de tubes suivant l'invention qui est réalisé de façon à accroître encore la résistance à l'usure des surfaces d'étanchéité métal-métal, en vue d'améliorer encore leur tenue au cours de très nombreux cycles de vissage-dévissage en service.

La figure 6 représente en coupe, de façon schématique et fortement agrandie, un manchon d'assemblage 61 comportant deux logements femelles tels que 62 disposés de part et d'autre d'un plan de symétrie X3-X3 perpendiculaire à l'axe longitudinal du manchon 61. Seule la partie de la coupe située au-dessus de l'axe est représentée et un seul des deux logements femelles, situé à gauche du plan de symétrie X3-X3 est figuré.

Ce manchon, après usinage, a subi un traitement de surface pour améliorer sa résistance à l'usure et à la corrosion, tel qu'un traitement de phosphatation.

On voit sur la figure 6 la zone d'extrémité de l'élément mâle 63, après vissage partiel dans le logement fileté 62, juste avant l'entrée en contact des surfaces tronconiques d'étanchéité convexe et concave 64, 65.

La surface d'étanchéité tronconique convexe 64 a une génératrice inclinée d'environ 13° par rapport à l'axe longitudinal de l'élément mâle qui se confond avec celui du manchon. Cette génératrice a une longueur d'environ 2 mm. Elle est prolongée, à partir de son extrémité de grand diamètre 66, par une surface torique de raccordement dont la génératrice 67 est un arc de cercle a d'environ 13° d'ouverture et d'environ 4 mm de rayon, cette surface torique étant tangente à la surface tronconique 64. Une surface cylindrique, non nécessairement tangente à la surface torique, de génératrice 68, assure la liaison entre cette surface torique 67 et l'épaulement d'arrêt mâle 69. En aval, l'extrémité de faible diamètre 70 de la surface tronconique convexe se raccorde à la paroi frontale annulaire 71, perpendiculaire à l'axe longitudinal de l'élément mâle, par l'intermédiaire d'un arrondi 72 de forme sensiblement tronconique et de faible rayon.

La surface tronconique concave 65 est de longueur supérieure à la surface tronconique convexe 64 et son extrémité amont 73 est de diamètre supérieur à l'extrémité amont de plus grand diamètre 66 de la surface tronconique convexe correspondante. Cette extrémité se raccorde par une surface cylindrique 74 avec l'épaulement d'arrêt femelle 75. En amont de cet épaulement d'arrêt et avant le début de la zone filetée femelle est ménagée, de préférence, une zone annulaire non filetée 76 qui a permis lors de l'usinage soit l'introduction soit l'enlèvement d'un outil d'usinage par exemple à 2 dents. De préférence également, la longueur de cette zone annulaire est au minimum de 1,5 fois le pas du filetage.

Le contour figuré en tirets représente la position de l'élément mâle à l'intérieur du logement femelle juste avant que les épaulements 69-75 entrent en contact. La paroi frontale annulaire 71 est alors dans le plan médian X3-X3. On voit que l'établissement d'un contact d'étanchéité métal-métal entre les deux surfaces tronconiques 64, 65 précède l'arrivée de la paroi frontale 71 dans le plan médian X3-X3. On voit aussi que la rencontre entre les deux surfaces tronconiques 64, 65 s'accompagne d'un glissement de la surface convexe 64 sur la surface concave 65 en direction de l'aval avec en même temps un refoulement de la surface concave 65 et une compression de la surface convexe 64 par interférence, comme le montre le tracé en tirets 64.1 qui cherche à donner une idée du positionnement atteint par les surfaces tronconiques 64, 65 en contact quand la paroi frontale a rejoint le plan X3-X3.

Comme indiqué dans la description générale, le calcul et l'expérience ont montré que la pression maximale exercée entre les deux surfaces tronconiques 64, 65 se situe bien dans la zone de grand diamètre 66 de la surface tronconique convexe, adjacente à la surface torique 67. Le glissement de cette zone sur la surface tronconique concave 65 limite l'usure de celle-ci grâce à la répartition de cette usure et à la couche protectrice.

On obtient ainsi une excellente étanchéité au niveau des surfaces tronconiques, étanchéité qui résiste particulièrement bien à un nombre important de vissages-dévissages.

L'invention peut être réalisée dans de très nombreuses variantes qui restent toutes dans le domaine couvert par le brevet.

## Revendications

1. Assemblage fileté pour tubes métalliques comportant un manchon (10, 41) muni de deux logements femelles (8, 9, 57) filetés dans lesquels sont engagés par vissage les éléments mâles (2, 3, 37, 38, 54) filetés de deux tubes métalliques, ces éléments mâles comportant chacun à leur extrémité une zone de butée non filetée se terminant par une paroi frontale (11, 12, 35, 36) caractérisé en ce que les parois frontales des éléments mâles viennent en appui l'une sur l'autre dans la position vissée et réalisent un contact métal-métal, la zone périphérique non filetée de chaque composant mâle voisine de la paroi frontale comportant une surface tronconique convexe (14, 15, 33, 34) ayant pour axe celui de l'élément mâle, cette surface tronconique convexe étant apte à venir en contact en fin de vissage avec une surface tronconique concave (19, 20, 42, 43) du logement femelle, avec une interférence positive, créant une portée d'étanchéité métal-métal, des épaulements d'arrêt permettant un positionnement axial précis des éléments mâles afin que les parois frontales, dans leur position en butée vissée, se positionnent dans une zone de tolérance bien définie par rapport au plan médian du manchon.

2. Assemblage fileté suivant revendication 1 caractérisé en ce que la paroi frontale de chaque élément mâle est plane et située dans un plan perpendiculaire à l'axe de l'élément mâle.

3. Assemblage fileté suivant revendication 1 ou 2 caractérisé en ce que les épaulements d'arrêt existent des deux côtés du manchon à l'intérieur de chaque logement femelle sous forme d'une surface annulaire d'arrêt orientée de façon telle qu'elle s'oppose à l'avance de l'élément mâle correspondant, chaque élément mâle comportant une surface annulaire correspondante apte à coopérer avec la surface annulaire d'arrêt située dans le logement femelle.

4. Assemblage fileté suivant revendication 1 ou 2 caractérisé en ce que les épaulements d'arrêt existent d'un seul côté du manchon à l'intérieur du logement femelle correspondant, sous forme d'une surface annulaire d'arrêt orientée de façon telle qu'elle s'oppose à l'avance de l'élément mâle correspondant, au moins chaque élément mâle destiné à être vissé dans un logement femelle muni d'épaulement d'arrêt ayant une surface annulaire d'arrêt comportant une surface annulaire correspondante apte à coopérer avec la surface annulaire d'arrêt du logement femelle.

5. Assemblage fileté suivant revendication 4 caractérisé en ce que chaque élément mâle comporte une surface annulaire pouvant servir d'épaulement d'arrêt et peut être vissé indifféremment dans un logement femelle comportant ou non une surface annulaire d'arrêt.

6. Assemblage fileté suivant l'une des revendications 3 à 5 caractérisé en ce que les épaulements d'arrêt comportent à l'intérieur des logements femelles du manchon une surface annulaire, (21, 22) dans un plan sensiblement perpendiculaire à l'axe du manchon entre la surface tronconique concave (19, 20) et l'extrémité du filetage femelle (6,7), surface annulaire apte à venir en appui contre une surface annulaire correspondante (16, 17) réalisée dans la paroi de l'élément mâle correspondant entre la surface tronconique convexe (14, 15) et l'extrémité du filetage mâle (4, 5).

7. Assemblage fileté suivant l'une des revendications 3 à 5 caractérisé en ce que les épaulements d'arrêt (39, 40) du logement femelle sont situés entre les surfaces d'étanchéité tronconiques concaves (42, 43) et la zone médiane (X2-X2) du manchon, les épaulements d'arrêt (31, 32) de l'élément mâle (37, 38) se trouvant entre la paroi frontale (35, 36) et la surface d'étanchéité tronconique convexe (33, 34).

8. Assemblage fileté suivant l'une des revendications 3 à 5 caractérisé en ce que, dans le cas d'un filetage à deux étages, les épaulements d'arrêt (59) des logements femelles (57) sont situés dans la zone assurant la liaison entre les deux étages du filetage, les deux épaulements d'arrêt des éléments mâles (54) se trouvant dans les zones correspondantes du filetage mâle.

9. Assemblage fileté suivant l'une des revendications 3 ou 6 à 8 caractérisé en ce que l'espacement des épaulements d'arrêt situés des deux côtés du manchon est déterminé de façon que, lorsque en position vissée, les parois frontales des deux éléments mâles sont serrés en butée l'un contre l'autre, un faible jeu persiste au niveau de l'une au moins des deux paires d'épaulements d'arrêt.

10. Assemblage fileté suivant l'une des revendications 1 à 9 caractérisé en ce que la surface tronconique convexe (64) formée sur la paroi périphérique du composant mâle dans la zone d'extrémité (63) non filetée est reliée à partir de son extrémité de grand diamètre (66) à une surface de liaison (68) par l'intermédiaire d'une surface annulaire de raccordement (67) de forme torique.

11. Assemblage fileté suivant revendication 10 caractérisé en ce que la surface tronconique concave (65) formée sur la paroi interne du manchon (61) qui coopère avec la surface tronconique convexe (64), a un grand diamètre (73) supérieur à l'extrémité amont de plus grand diamètre (66) de cette surface tronconique convexe et une génératrice parallèle à celle de cette surface tronconique convexe et de longueur supérieure à la génératrice de cette surface tronconique convexe.

12. Assemblage fileté suivant l'une des revendications 1 à 11 caractérisé en ce que la génératrice de la surface tronconique convexe a une longueur comprise entre 0,5 et 5 mm et une inclinaison par rapport à l'axe de l'élément mâle comprise entre 5 et 25°.

13. Assemblage fileté suivant l'une des revendications 1 à 6 caractérisé en ce que l'extrémité de petit diamètre de la surface tronconique convexe (64) est reliée à la paroi frontale (71) par une surface torique de raccordement (72) de rayon compris entre 0,2 et 1,5 mm.

14. Assemblage fileté suivant l'une des revendications 1 à 13 caractérisé en ce que à l'intérieur du manchon dans la zone non filetée de chaque logement se trouve un espace annulaire 76 adjacent au début du filetage tronconique ménagé pour permettre l'usinage du filetage.

15. Assemblage fileté suivant revendication 1 caractérisé en ce que la surface commune d'appui des deux parois frontales des éléments mâles en position vissée est plane et perpendiculaire à l'axe du manchon.

16. Assemblage fileté suivant l'une des revendications 1 à 15 caractérisé en ce que les filetages des éléments mâles et des deux logements femelles sont tronconiques à interférence positive.

17. Assemblage fileté suivant l'une des revendications 1 à 15 caractérisé en ce que les filetages des éléments mâles et des deux logements femelles sont cylindriques.

18. Assemblage fileté suivant l'une des revendications 1 à 15 caractérisé en ce que les filetages des éléments mâles et des deux logements femelles sont des filetages à deux étages.

19. Assemblage fileté suivant l'une des revendications 1 à 18 caractérisé en ce que les filetages des éléments mâles et femelles sont du type buttress à flancs chargés à angles positifs ou négatifs.

20. Mode de réalisation d'un assemblage entre un manchon fileté et deux éléments mâles de deux tubes métalliques suivant l'une des revendications 3 ou 6 à 19 caractérisé en ce qu'on visse un premier élément mâle dans un logement femelle jusqu'à détection d'un accroissement du couple de serrage combiné avec un blocage de l'avance dû à la mise en contact des deux épaulements d'arrêt correspondants, puis on effectue le vissage du deuxième élément mâle dans son logement jusqu'à la venue en butée des parois frontales des deux éléments mâles et application du couple de serrage désiré, un faible jeu persistant en fin de vissage entre les deux épaulements d'arrêt correspondant au deuxième élément mâle.

## Patentansprüche

1. Gewindeverbindung für Metallrohre, mit einer Muffe (10, 41), die mit zwei Muttergewindeaufnahmen (8, 9, 57) versehen ist, in die durch Verschraubung Vatergewindeelemente (2, 3, 37. 38, 54) zweier Metallrohre eingreifen, wobei diese Vaterelemente jeweils an ihrem Ende eine gewindelose Anschlagzone aufweisen, die in einer Vorderwand (11, 12, 35, 36) endet, dadurch gekennzeichnet, daß die Vorderwände der Vaterelemente in der eingeschraubten Lage gegeneinander zur Anlage gelangen und stützen und eine Metall-auf-Metall-Berührung herstellen, daß die gewindelose Umfangszone eines jeden Vaterteils, die der Vorderwand benachbart ist, eine konvexe Kegelstumpffläche (14, 15, 33, 34) aufweist, deren Achse die des Vaterelements ist, daß diese konvexe Kegelstumpffläche dazu eingerichtet ist, am Ende der Verschraubung mit einer konkaven Kegelstumpffläche (19, 20, 42, 43) der Mutteraufnahme unter Preßsitz in Berührung zu treten, was einen Dichtungsbereich von Metall auf Metall ergibt, und daß Anschlagschultern eine genaue axiale Positionierung der Vaterelemente gestatten, damit die Vorderwände in ihrer Verschraubungs-Anlageposition in einer Toleranzzone angeordnet sind, die in Bezug auf die Mittelebene der Muffe definiert ist.

2. Gewindeverbindung nach Anspruch 1, dadurch gekennzeichnet, daß die Vorderwand eines jeden Vaterelements eben ist und in einer Ebene gelegen ist, die senkrecht zur Achse des Vaterelements verläuft.

3. Gewindeverbindung nach Anspruch 1 oder 2, dadurch gekennzeichnet, daß die Anschlagschultern auf zwei Seiten der Muffe innerhalb einer jeden Mutteraufnahme in Form einer Anschlagringfläche vorliegen, die derart ausgerichtet ist, daß sie der Vorwärtsbewegung des entsprechenden Vaterelements entgegenwirkt, wobei jedes Vaterelement eine entsprechende Ringfläche aufweist, die dazu eingerichtet ist, mit der Anschlagringfläche zusammenzuwirken, die in jeder Mutteraufnahme vorliegt.

4. Gewindeverbindng nach Anspruch 1 oder 2, dadurch gekennzeichnet, daß die Anschlagschultern auf einer einzigen Seite der Muffe im Inneren der entsprechenden Mutteraufnahme in Form einer Anschlagringfläche vorliegen, die derart ausgerichtet ist, daß sie der Vorwärtsbewegung des entsprechenden Vaterelements entgegenwirkt, wobei mindestens jedes Vaterelement, das dazu bestimmt ist, in eine Mutteraufnahme eingeschraubt zu werden, die mit einer Anschlagschulter versehen ist, eine Anschlagringfläche aufweist, mit einer entsprechenden Ringfläche, die dazu eingerichtet ist, mit der Ansachlagringfläche der Mutteraufnahme zusammenzuwirken.

5. Gewindeverbindung nach Anspruch 4, dadurch gekennzeichnet, daß jedes Vaterelement eine Ringfläche aufweist, die als Anschlagschulter dienen kann und in eine Mutteraufnahme eingeschraubt werden kann, ob diese nun eine Anschlagringfläche aufweist oder nicht.

6. Gewindeverbindung nach einem der Ansprüche 3 bis 5, dadurch gekennzeichnet, daß die Anschlagschultern im Inneren der Mutteraufnahme der Muffe eine Ringfläche (21, 22) in einer Ebene aufweisen, die im wesentlichen senkrecht zur Achse der Muffe Verläuft, und zwar zwischen der konkaven Kegelstumpffläche (19, 20) und dem Ende des Muttergewindes (6, 7), und daß die Ringfläche dazu eingerichtet ist, zur Anlage gegen eine entsprechende Ringfläche (16, 17) zu gelangen, die in der Wand des entsprechenden Vaterelements zwischen der konvexen Kegelstumpffläche (14, 15) und dem Ende des Vatergewindes (4, 5) ausgebildet ist.

7. Gewindeverbindung nach einem der Ansprüche 3 bis 5, dadurch gekennzeichnet, daß die Anschlagschultern (39, 40) der Mutteraufnahme zwischen den konkaven Abdichtungs-Kegelstumpfflächen (42, 43) und der Mittelzone (X2-X2) der Muffe gelegen sind, und daß sich die Anschlagschultern (31, 32) des Vaterelements (37, 38) zwischen der Vorderwand (35, 36) und der konvexen Abdichtungs-Kegelstumpffläche (33, 34) befinden.

8. Gewindeverbindung nach einem der Ansprüche 3 bis 5, dadurch gekennzeichnet, daß im Fall eines zweistufigen Gewindes die Anschlagschultern (59) der Mutteraufnahmen (57) in der Zone gelegen sind, die die Verbindung zwischen den beiden Gewindestufen sicherstellt, und daß die beiden Anschlagschultern der Vaterelemente (54) sich in den entsprechenden Zonen des Vatergewindes befinden.

9. Gewindeverbindung nach einem der Ansprüche 3 oder 6 bis 8, dadurch gekennzeichnet, daß der Abstand der Anschlagschultern, die auf den beiden Seiten der Muffe gelegen sind, derart bestimmt ist, daß dann, wenn die Vorderwände der beiden Vaterelemente in der festgeschraubten Lage im Anschlag gegeneinander festgeklemmt sind, eine geringes Spiel auf Höhe mindestens eines der Paare von Anschlagschultern vorliegt.

10. Gewindeverbindung nach einem der Ansprüche 1 bis 9, dadurch gekennzeichnet, daß die konvexe Kegelstumpffläche (64), die auf der Umfangswand des Vaterteils in der gewindelosen Endzone (63) ausgebildet ist, von ihrem Ende mit großem Durchmesser (66) aus mit einer Verbindungsfläche (68) verbunden ist, und zwar über eine torusförmige Verbindungs-Ringfläche (67).

11. Gewindeverbindung nach Anspruch 10, dadurch gekennzeichnet, daß die konkave Kegelstumpffläche (65), die auf der Innenwand der Muffe (61) ausgebildet ist und mit der konvexen Kegelstumpffläche (64) zusammenwirkt, einen großen Durchmesser (73) aufweist, der größer ist als das davorliegende Ende mit großem Durchmesser (66) dieser konvexen Kegelstumpffläche, sowie eine Erzeugende, die parallel ist zu dieser der konvexen Kegelstumpffläche, und eine Länge, die größer ist als die Erzeugende dieser konvexen Kegelstumpffläche.

12. Gewindeverbindung nach einem der Ansprüche 1 bis 11, dadurch gekennzeichnet, daß die Erzeugende der konvexen Kegelstumpffläche eine Länge aufweist, die zwischen 0,5 und 5 mm liegt, und eine Neigung in Bezug auf die Achse des Vaterelements, die zwischen 5 und 25° liegt.

13. Gewindeverbindung nach einem der Ansprüche 1 bis 6, dadurch gekennzeichnet, daß das Ende mit kleinem Durchmesser der konvexen Kegelstumpffläche (64) mit der Vorderwand (71) über eine torusförmige Verbindungsfläche (72) mit einem Radius verbunden ist, der zwischen 0,2 und 1,5 mm liegt.

14. Gewindeverbindung nach einem der Ansprüche 1 bis 13, dadurch gekennzeichnet, daß im Inneren der Muffe in der gewindelosen Zone einer jeden Aufnahme sich ein Ringraum 76 neben dem kegelstumpfförmigen Gewindeeinlauf befindet, der eingebracht ist, um die spanende Bearbeitung des Gewindes zu gestatten.

15. Gewindeverbindung nach Anspruch 1, dadurch gekennzeichnet, daß die gemeinsame Anlagefläche für beide Vorderwände der Vaterelemente in der festgeschraubten Lage eben und senkrecht zur Muffenachse verläuft.

16. Gewindeverbindung nach einem der Ansprüche 1 bis 15, dadurch gekennzeichnet, daß die Gewinde der Vaterelemente und der beiden Mutteraufnahmen kegelstumpfförmig und mit Klemmsitz ausgebildet sind.

17. Gewindeverbindung nach einem der Ansprüche 1 bis 15, dadurch gekennzeichnet, daß die Gewinde der Vaterelemente und der beiden Mutteraufnahmen zylindrisch sind.

18. Gewindeverbindung nach einem der Ansprüche 1 bis 15, dadurch gekennzeichnet, daß die Gewinde der Vaterelemente und der beiden Mutteraufnahmen zweistufige Gewinde sind.

19. Gewindeverbindung nach einem der Ansprüche 1 bis 18, dadurch gekennzeichnet, daß die Gewinde der Vater- und Mutterelemente Sägezahngewinde mit positiv oder negativ geneigten Flanken sind.

20. Herstellungsweise einer Verbindung zwischen einer Gewindemuffe und zwei Vaterelementen zweier Metallrohre nach einem der Ansprüche 3 oder 6 bis 19, dadurch gekennzeichnet, daß man ein erstes Vaterelement in eine Mutteraufnahme einschraubt, bis man eine Erhöhung des Anziehmoments erfaßt, kombiniert mit einer Blockierung der Vorwärtsbewegung infolge der Berührungsaufnahme der beiden entsprechenden Anschlagschultern, und daß man danach das Einschrauben des zweiten Vaterelemetns in seine Aufnahme vornimmt, bis die Vorderwände der beiden Vaterelemente zur Anlage gelangt sind und das angestrebte Klemm-Moment aufgebracht ist, wobei am Ende der Verschraubung beim zweiten Vaterelement ein geringes Spiel zwischen den beiden entsprechenden Anschlagschultern vorliegt.

## Claims

1. Threaded joint for metal pipes comprising a sleeve (10, 41) provided with two threaded female housings (8, 9, 57) in which the male elements (2, 3, 37, 38, 54) of two metal pipes are engaged by means of screwing, these male elements each comprising on their end a non-threaded abutment zone, ending in an end face (11, 12,35, 36), characterised in that the end faces of the male elements bear one upon the other in the screwed-down position, and produce a metal-metal contact, the non-threaded peripheral zone of each male component adjacent to the end face comprising a tapering convex surface (14, 15, 33, 34) having as its axis that of the male element, this tapering convex surface being suitable for coming into contact, when ending the screwing, with a tapering concave surface (19, 20, 42, 43) of the female housing, with positive interference, creating a sealing metal-metal bearing surface, shoulder stops allowing precise axial positioning of the male elements so that the end faces, in their abutted, screwed down position are positioned in a tolerance zone well defined with respect to the median plane of the sleeve.

2. Threaded joint according to claim 1, characterised in that the end face of each male element is flat and located in a plane perpendicular to the axis of the male element.

3. Threaded joint according to claim 1 or 2, characterised in that the shoulder stops are present on both sides of the sleeve in the interior of each female housing in the form of an annular stopping surface oriented in such a manner that it opposes the moving forward of the corresponding male element, each male element comprising a corresponding annular surface suitable for co-operating with the annular stopping surface located in the female housing.

4. Threaded joint according to claim 1 or 2, characterised in that the shoulder stops are present on only one side of the sleeve, in the inside of the corresponding female housing in the form of an annular stopping surface oriented in such a manner that it opposes the moving forward of the corresponding male element, at least each male element intended to be screwed into a female housing having a shoulder stop with an annular stopping surface comprising a corresponding annular surface suitable for co-operating with the annular stopping surface of the female housing.

5. Threaded joint according to claim 4, characterised in that each male element comprises an annular surface which can serve as a shoulder stop and can be screwed equally well into a female housing with or without an annular stopping surface.

6. Threaded joint according to one of claims 3 to 5, characterised in that the shoulder stops comprise, in the interior of the female housings of the sleeve, an annular surface (21, 22) on a plane substantially perpendicular to the axis of the sleeve, between the tapering concave surface (19, 20) and the end of the female thread (6, 7), which annular surface is suitable to bear against a corresponding annular surface (16, 17) made in the wall of the corresponding male element between the tapering convex surface (14, 15) and the end of the male thread (4, 5).

7. Threaded joint according to one of claims 3 to 5, characterised in that the shoulder stops (39, 40) of the female housing are located between the tapering concave sealing surfaces (42, 43) and the median zone (X2-X2) of the sleeve, the shoulder stops (31, 32) of the male element (37, 38) being located between the end face (35) 36) and the tapering convex sealing surface (33, 34).

8. Threaded joint according to one of claims 3 to 5, characterised in that in the case of a thread on two levels, the shoulder stops (59) of the female housings (57) are located in the zone which ensures connection between the two levels of the thread, the two shoulder stops of the male elements (54) being located in corresponding zones of the male thread.

9. Threaded joint according to one of claims 3 or 6 to 8, characterised in that the spacing of the shoulder stops located in the two sides of the sleeve is determined in such a manner that when they are in the screwed-down position, the end faces of the two male elements are tightly abutted one against the other, and a slight clearance remains at the level of one, at least, of the two pairs of shoulder stops.

10. Threaded joint according to one of claims 1 to 9, characterised in that the convex tapering surface (64) formed on the peripheral wall of the male component in the non-threaded end (63) is joined from its large diameter end (66) to a connecting surface (68) by means of an annular joining surface (67) with a toric shape.

11. Threaded joint according to claim 10, characterised in that the concave tapering surface (65) formed on the internal wall of the sleeve (61) which cooperates with the convex tapering surface (64) has a large diameter (73) greater than the larger diameter upward end (66) of this convex tapering surface and a generating line parallel to that of this convex tapering surface and longer than the generating line of this convex tapering surface.

12. Threaded joint according to one of claims 1 to 11, characterised in that the generating line of the convex tapering surface is between 0.5 and 5 mm long and is inclined between 5 and 25° with respect to the axis of the male element.

13. Threaded joint according to one of claims I to 6, characterised in that the small diameter end of the convex tapering surface (64) is joined to the end face (71) by a toric connecting surface (72) with a radius of between 0.2 and 1.5 mm.

14. Threaded joint according to one of claims 1 to 13, characterised in that in the inside of the sleeve, in the non-threaded zone of each housing an annular space 76 is located adjacent to the beginning of the tapering thread arranged to allow machining of the thread.

15. Threaded joint according to claim 1, characterised in that the common bearing surface of the two end faces of the male elements in the screwed down position is flat and perpendicular to the axis of the sleeve.

16. Threaded joint according to one of claims 1 to 15, characterised in that the threads of the male elements and of the two female housings are tapering with a positive interference.

17. Threaded joint according to one of claims 1 to 15, characterised in that the threads of the male elements and of the two female housings are cylindrical.

18. Threaded joint according to one of claims 1 to 15, characterised in that the threads of the male elements and of the two female housings are two-level threads.

19. Threaded joint according to one of claims 1 to 18, characterised in that the threads of the male and female elements are of the buttress type with load flanks which have positive or negative angles.

20. Method for carrying out joining between a threaded sleeve and two male elements of two metal pipes according to one of claims 3 or 6 to 19, characterised in that a first male element is screwed into a female housing until an increase in the tightening torque - detected, combined with a blocking of the advancement due to the coming into contact of the two corresponding shoulder stops, then the second male element is screwed into its housing until the end faces of the two male elements abut and application of the desired tightening torque, a slight clearance remaining at the end of the screwing between the two shoulder stops corresponding to the second male element.
